# EUROPÄISCHE PATENTSCHRIFT

(11) **EP 0 957 624 B1**
(45) Veröffentlichungstag und Bekanntmachung des Hinweises auf die Patenterteilung: **31.05.2006**
(21) Anmeldenummer: 99440097.6
(22) Anmeldetag: 30.04.1999
(51) Int. Cl.: H04M 15/08, H04Q 7/38, H04M 15/28

(54) **Verfahren zur Übernahme von Anrufsgebühren in einzelnen Verbindungen sowie Telefonnetz und Endgerät**
Method for taking over call charges in individual calls, telephone network and terminal
Procédé pour l'acceptation de frais d'appel pour connexions individuelles, réseau téléphonique et terminal

(30) Priorität: 14.05.1998 DE 19821584
(43) Veröffentlichungstag der Anmeldung: 17.11.1999
(73) Patentinhaber: ALCATEL, 75008 Paris (FR)
(72) Erfinder: Sawatzki, Roland Dr., 89231 Neu-Ulm (DE); Stiefel, Rolf, 70839 Gerlingen (DE)
(74) Vertreter: Rausch, Gabriele

(56) Entgegenhaltungen:
- DE-A- 4 222 235
- DE-A- 19 515 418
- US-A- 5 381 467
- US-A- 5 579 379

## Beschreibung

Die Erfindung betrifft in einem ersten Aspekt ein Verfahren zur Übernahme von Anrufgebühren durch den anrufenden Teilnehmer in einzelnen Verbindungen eines Telefonnetzes sowie ein entsprechendes Telefonnetz und ein entsprechendes Endgerät.

Unter bestimmten Umständen, insbesondere in GSM (engl.: global system for mobile communication), muß ein angerufener Teilnehmer Anrufgebühren ebenso wie der anrufende Teilnehmer zahlen. Die Entscheidung des angerufenen Teilnehmers, ob er den Anruf akzeptiert oder nicht, kann von den von ihm zu zahlenden Gebühren abhängen. So müssen GSM-Benutzer, wenn sie sich in anderen Netzen (sog. Roaming), z.B. im Ausland befinden, für die Roaming-Strecke Anrufgebühren zahlen, und zwar auch dann, wenn sie ungewollte Anrufe empfangen. Um die Telefonverbindungen kontrollierbar zu machen, sollte ein angerufener Teilnehmer daher entscheiden können, ob er einen Anruf akzeptiert oder nicht.

Aus dem Stand der Technik ist bekannt, daß die Übernahme von Anrufgebühren eines Telefongespräches durch den Benutzer angezeigt werden kann, wenn ein Operator das Gespräch vermittelt. Dabei wird mündlich die Übernahme der Anrufgebühr durch den anrufenden Teilnehmer für ein aufzubauendes Telefongespräch mit dem Operator des Telefonnetzbetreibers vereinbart.

Bekannt ist ebenfalls eine Übernahme von Anrufgebühren durch die angerufene Person in einem ISDN-Telefonnetz. In der Druckschrift DE-NA-10017, Januar 1994, ETSI Publikation "Integrated Services Digital Network" wird die Methode bei Verwendung des ISDN-Telefonnetzes erläutert. Dabei kann der Benutzer feste Verbindungen vorwählen, für die die Gebührenübernahme mit dem Netzbetreiber vereinbart ist. Es ist allerdings auch möglich, eine Gebührenübernahme zu signalisieren, wenn ein solcher Dienst vom Anrufer angefordert wurde. Der Benutzer muß dann mit Hilfe eines Paßwortes, das in Form einer Ziffernkombination am Telefonendgerät eingegeben wird, seine Benutzerkennung gegenüber dem Netzbetreiber anzeigen. Dieser Service zur Übernahme von Gebühren muß für den einzelnen Anwender eingerichtet sein. Die Funktion der Gebührenübernahme im ISDN-Festnetz ist an einen bestimmten Teilnehmeranschluß gebunden.

Aus der DE-OS 42 22 235 ist eine Telefonanlage bekannt, deren Endgeräte mit einer Chipkarte bedient werden. Die Chipkarte enthält eine persönliche Verrechnungsnummer für die anfallende Gebühr, die durch Vergleich in einer Datei der. Telefonanlage abgeglichen wird. Die einzelnen Endgeräte können nur dann bedient werden, wenn die persönliche Verrechnungsnummer den jeweiligen Benutzer zum Aufbau einer Verbindung berechtigt. Die Telefonendgeräte enthalten für die Durchführung des Verfahrens einen Kartenleser, der in der Lage ist, die auf einer Chipkarte gespeicherten Informationen zu lesen.

Ebenfalls bekannt ist die Verwendung von sogenannten SIM-Karten (engl.: subscriber identity module) z.B. für die Verwendung in GSM-Telefonfunknetzen. Diese Karten enthalten eine persönliche Identifikationsnummer, einen Algorithmus und einen persönlichen Teilnehmerschlüssel zur Erzeugung einer Authentikationsinformation, die an eine Zentrale übertragen wird und dort auf die Berechtigung des Benutzers überprüft wird. Die Benutzung der bisher bekannten Chipkarten ermöglicht den Aufbau von Verbindungen, aber keine Übernahme von Gebühren, die erst durch den Anruf eines Dritten entstehen.

Aus der DE 195 15 418 ist ein Verfahren bekannt, bei dem ein Anrufer alle Gebühren bezahlen muss. Dazu wird ihm, wenn sich beispielsweise der Angerufene im Ausland befindet angezeigt, dass höhere Gebühren anfallen und der Anrufer kann dann durch Betätigung einer entsprechenden Taste den Anruf fortsetzen und die höheren Gebühren damit akzeptieren. Zusätzlich wird auch dem Angerufenen der Anruf angezeigt und dieser hat dann die Möglichkeit durch Annehmen des Anrufs die Gebühren zu übernehmen.

Aus der US 5,579,379 ist ein Verfahren bekannt, bei dem ein Anrufer eine vom Angerufenen zuvor festgelegte PIN eingibt, worauf hin ihm keine Gebühren zur Last fallen. Alternativ kann der Anrufer seine Kreditkartennummer eingeben, worauf hin ihm die Anrufgebühren auf sein Kreditkartenkonto belastet werden. Der Angerufene erhält von dem Anruf vor Eingabe der Kreditkartennummer jedoch keine Kenntnis, und kann die Gebührenverteilung folglich nicht beeinflussen.

Aus der EP 0 812 081 A2 ist es bekannt, dass ein Anrufer an einen Angerufenen, der eine entgeltliche Dienstleistung erbringt, zur Bestätigung der Kostenübernahme eine digitale Signatur sendet, die mit Hilfe einer mit seinem Telefon gekoppelten Chipkarte erstellt wurde.

Der Erfindung liegt die Aufgabe zugrunde, ein Verfahren zur Übernahme von Anrufgebühren durch den anrufenden Teilnehmer anzugeben, welcher unabhängig ist von einem bestimmten Teilnehmeranschluß. Weitere Aufgaben der Erfindung sind, ein Endgerät und ein Telefonnetz anzugeben, mit denen das Verfahren ausgeführt werden kann.

Ein Vorteil der Erfindung besteht darin, daß der angerufene Teilnehmer eine verbindliche und unabstreitbare Gebührenvereinbarung mit dem anrufenden Teilnehmer treffen kann und der angerufene Teilnehmer somit vor einem nachträglichen Verwerfen der ausgehandelten . Gebührenvereinbarung durch den anrufenden Teilnehmer geschützt wird.

Die Aufgabe wird erfindungsgemäß bei einem Verfahren der eingangs genannten Art dadurch gelöst, daß nach Vereinbarung einer Gebührenaufteilung zwischen zwei Teilnehmern der anrufende Teilnehmer als verbindliche Bestätigung (Genehmigung) dieser Vereinbarung ein anruferspezifisches Signal sendet und daraufhin der angerufene Teilnehmer den Anruf annimmt.

Der anrufende Teilnehmer kann mit einer Chipkarte (smart card) ausgerüstet sein, die einen Verschlüsselungscode, z.B. eine digitale Unterschrift enthält. Zur Gebührenaushandlung ermöglicht es die Karte, daß der anrufende Teilnehmer eine verbindliche und unabstreitbare, d.h. später nicht zurücknehmbare Erklärung, höhere bzw. alle Anrufgebühren zu zahlen, abgeben kann. Dadurch wird die Sicherheit verbessert bzw. der Schutz des angerufenen Teilnehmers vor ungewollten oder unerwarteten Gebühren erhöht.

Die Gebührenaushandlung auf der Seite des angerufenen Teilnehmers kann von einem neuen Service/Dienst (Erreichbarkeitsmanager) oder über das Terminal des angerufenen Teilnehmers durchgeführt werden. Wenn der Anrufer dem Zahlen höherer Gebühren zustimmt, sendet er das anruferspezifische Signal, welches mit Hilfe der Karte erzeugt wird, an das Telefonnetz, und die Verbindung wird eingerichtet. Das anruferspezifische Signal wird als Garantie benötigt, daß die vereinbarte Gebührenakzeptanz nicht später durch den anrufenden Teilnehmer wieder verworfen wird.

Das erfindungsgemäße Verfahren zur Gebührenübernahme, das in existierende IN(Intelligentes Netz)-Architekturen implementierbar ist, ist für jede Art von Telefondiensten auf der angerufenen Seite einsetzbar, um die Gebührenberechnung des angerufenen Dienstes sicherzustellen.

Das erfindungsgemäße Verfahren ist darüberhinaus geeignet für alle Arten von Telefon- und Kommunikationsdiensten eine verbindliche und nicht-abstreitbare Gebühren- bzw. Kostenaushandlung zu ermöglichen, wie z.B. eine Kostenaushandlung für Beratungsgespräche.

Bei bevorzugten Ausgestaltungen des erfindungsgemäßen Verfahrens wird als anruferspezifisches Signal ein digitaler Code gesendet, der eine digital unterschriebene Antwort darstellt oder als eine solche gilt. Die Karte wird benötigt, um das Nichtverwerfen der Gebührenakzeptanz zu garantieren.

Vorzugsweise ist das zu sendende anruferspezifische Signal im Endgerät des anrufenden Teilnehmers vorab gespeichert, z.B. auf einer Chipkarte, die nur bei Bedarf in einen Kartenleser des Endgerätes eingeführt wird oder dauerhaft im Endgerät installiert ist.

Mit diesem Verfahren ist es insbesondere möglich, die Gebührenaufteilung sowohl vor dem Aufbau einer Verbindung als auch während der Verbindung zu vereinbaren.

Bei einem Telefonnetz bestehend aus Endgeräten und mindestens einer zentralen Einheit, welche insbesondere in einer zentralen Netzwerk-Architektur aufgebaut ist, weist die zentrale Einheit erfindungsgemäß Mittel zur Vereinbarung einer Gebührenaufteilung zwischen zwei Endgeräten sowie Mittel zur Verarbeitung eines von einem Endgerät als verbindliche Bestätigung dieser Vereinbarung übertragenen anruferspezifischen Signals auf.

In bevorzugter Ausführungsform sind die Verbindungen zwischen der zentralen Einheit und den Endgeräten Fest- oder Funkverbindungen.

Bei einem Endgerät mit einem Kartenleser für eine Chipkarte sendet erfindungsgemäß das Endgerät, wenn für einen Anruf eine Gebührenaufteilung vereinbart ist, als Bestätigung dieser Vereinbarung ein auf der Chipkarte gespeichertes anruferspezifisches Signal an die zentrale Einheit.

Die Erfindung betrifft in einem weiteren Aspekt auch eine Chipkarte zur Verwendung in einem Endgerät des oben beschriebenen Telefonnetzes. Diese Chipkarte kann entweder nur bei Bedarf in einen Kartenleser des Endgerätes eingeführt werden oder dauerhaft z.B. als sogenannte SIM-Karte, wie sie bereits im Bereich der Nachrichtenübertragung zur Teilnehmer-Identifizierung verwendet wird, im Endgerät installiert sein. Erfindungsgemäß ist auf der Chipkarte das anruferspezifische Signal zur Bestätigung einer vereinbarten Gebührenübernahme als digitaler Code gespeichert. Dieser digitale Code ist vorzugsweise auf derjenigen SIM-Karte, die auch die Berechtigungsdaten des Benutzers enthält, integriert.

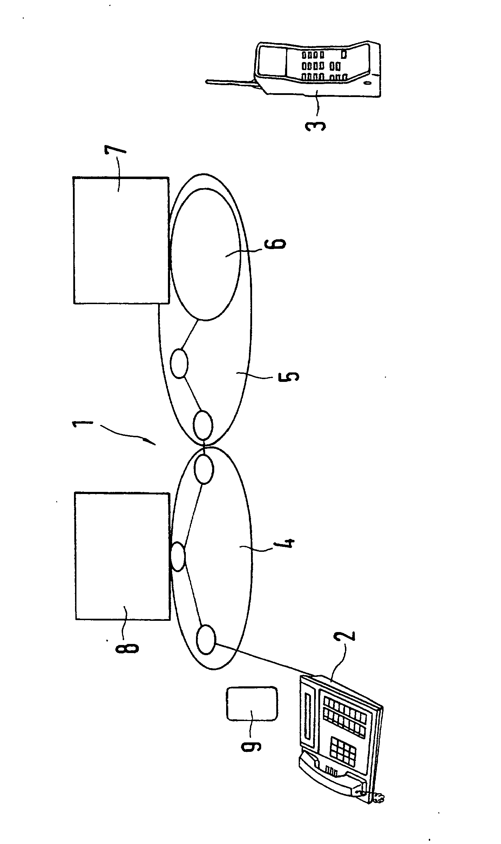

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die . Schilderung der Erfindung.

Die einzige Figur zeigt stark schematisch ein Telefonnetz 1 mit zwei Endgeräten 2 und 3.

Das erste Endgerät 2 ist eine Feststation, die an ein öffentliches Telekommunikationsnetz 4 (engl.: PSTN = public switched telecommunications network), z.B. an ISDN (engl.: integrated services digital network) angeschlossen ist. Das zweite Endgerät 3 ist ein Mobilfunkgerät, das an ein öffentliches Mobilfunknetz 5, wie z.B. GSM, mit einer HLR-Datenbank 6 (engl.: home location register) angeschlossen ist.

In GSM muß unter bestimmten Umständen ein angerufener Teilnehmer (B-Teilnehmer) Anrufgebühren ebenso wie der anrufende Teilnehmer (A-Anrufer) zahlen. Die Entscheidung des angerufenen Teilnehmers, ob er den Anruf akzeptiert oder nicht, kann von den von ihm zu zahlenden Gebühren abhängen.

Ein z.B. im Ausland befindlicher Roaming-GSM-Teilnehmer, im gezeigten Ausführungsbeispiel das zweite Endgerät 3, sollte durch Service-Profilmanagement in der Lage sein, Bedingungen für Gebührenaushandlungen und andere Erreichbarkeitsbedingungen bei einem Erreichbarkeitsmanager (reachability manager) 7 in der HLR-Datenbank 6 zu definieren. Solche Erreichbarkeitskriterien können z.B. sein:
- anrufende Teilnehmernummer (z.B. um zwischen privaten und geschäftlichen Gesprächspartnern zu unterscheiden);
- Zeit des Anrufs;
- Anrufgebühren (z.B. identifiziert durch den Anruf-Ländercode), die mit dem Anrufer ausgehandelt werden.

Entsprechend den Erreichbarkeitsbedingungen werden alle ankommenden Anrufe des B-Teilnehmers gefiltert und, falls bestimmt, Anrufgebühren mit dem Anrufer ausgehandelt. Um dem Anrufer Gebührenaushandlungen zu ermöglichen, stellt das anrufende Netzwerk, im Ausführungsbeispiel das Telekommunikationsnetz 4 Gebührenaushandlung durch Funktionen eines Intelligenten Netzes (IN) 8 bereit. Dies schließt die Authentikation des anrufenden Teilnehmers und die Gebührenaufteilung zwischen den beiden zusammenarbeitenden Netzwerken 4, 5 ein.

Eine Chipkarte 9 ermöglicht es dem Anrufer, eine verbindliche Antwort für eine Gebührenakzeptanz an eine zentrale Einheit des Telefonnetzes 1 abzugeben. Auf dieser Chipkarte 9 ist ein verschlüsselter digitaler Code als digitale Unterschrift gespeichert oder es wird aufgrund von auf der Chipkarte 9 gespeicherten Daten ein verschlüsselter digitaler Code erzeugt. Bei letzterem ist es sowohl möglich, daß der Code auf der Chipkarte erzeugt wird als auch im Endgerät 1. Mit einem Kartenleser (nicht gezeigt) im ersten Endgerät 1 läßt sich die digitale Unterschrift auslesen, die dann als anruferspezifisches Signal zur verbindlichen Bestätigung einer Gebührenvereinbarung gesendet wird. Auf dieses Signal hin nimmt der angerufene Teilnehmer den Anruf an. Dazu weist die zentrale Einheit Mittel zur Vereinbarung einer Gebührenaufteilung zwischen den beiden Endgeräten 2, 3 sowie Mittel zur Verarbeitung eines von dem ersten Endgerät 2 als Bestätigung dieser Vereinbarung übertragenen anruferspezifischen Signals auf. Dieses Verfahren verbessert die Sicherheit, indem der Roaming-Teilnehmer gegen ein Verstellen von Anrufern und unerwartete Anrufgebühren geschützt wird.

Wenn auch das Endgerät des anrufenden Teilnehmers, im gezeigten Ausführungsbeispiel das erste Endgerät 2, mit einer intelligenten Chipkarte (smart card) ausgerüstet ist, d.h., wenn der A-Teilnehmer ebenfalls ein GSM-Subscriber ist, kann die obige Kartenanwendung durch eine Multi-Anwendungs-SIM-Karte und zusätzliche Funktionalität in der HLR-Datenbank 6 erreicht werden.

## Patentansprüche

1. Verfahren zur Übernahme von Anrufgebühren durch den anrufenden Teilnehmer (A) in einzelnen Verbindungen eines Telefonnetzes (1), wobei nach Vereinbarung einer Gebührenaufteilung zwischen beiden Teilnehmern von dem Endgerät (2) des anrufenden Teilnehmers (A) als verbindliche Bestätigung dieser Vereinbarung ein anruferspezifisches Signal an eine zentrale Einheit (7, 8) des Telefonnetzes (1) gesendet wird, die zentrale Einheit (7, 8) das anruferspezifische Signal verarbeitet und daraufhin der angerufene Teilnehmer (B) den Anruf annimmt, **dadurch gekennzeichnet, dass** das anruferspezifisches Signal in Form einer digitalen Unterschrift gesendet wird.

2. Verfahren nach Anspruch 1, bei dem die zu sendende digitale Unterschrift im Endgerät (2; 3) des anrufenden Teilnehmers (A) mittels einer Chipkarte erzeugt wird.

3. Verfahren nach Anspruch 1 oder 2, bei dem die Gebührenaushandlung durch Funktionen eines Intelligenten Netzes (8) ausgeführt wird.

4. Verfahren nach Anspruch 3, bei dem das Telefonnetz (1) aus zwei zusammenarbeitenden Netzwerken (4, 5) besteht, bei dem die Funktionen des Intelligenten Netzes vom Netzwerk (4) des anrufenden Teilnehmers (A) bereitgestellt werden und bei dem die Funktionen des Intelligenten Netzes eine Authentikation des anrufenden Teilnehmers (A) sowie eine Gebührenaufteilung zwischen den zwei zusammenarbeitenden Netzwerken (4, 5) umfassen.

5. Verfahren nach einem der vorhergehenden Ansprüche, bei dem die Gebührenaufteilung vor dem Aufbau einer Verbindung oder während der Verbindung vereinbart wird.

6. Telefonnetz (1) enthaltend mehrere Endgeröte (2, 3) und mindestens eine zentrale Einheit (7, 8), welche insbesondere in einer zentralen Netzwerk-Architektur aufgebaut ist, wobei die zentrale Einheit (7, 8) Mittel zur Vereinbarung einer Gebührenaufteilung zwischen zwei Endgeräten (2, 3) sowie Mittel zur Verarbeitung eines von einem Endgerät (2, 3) als verbindliche Bestätigung dieser Vereinbarung übertragenen anruferspezifischen Signals aufweist, **dadurch gekennzeichnet, dass** das anruferspezifische Signal eine digitale Unterschrift umfasst.

7. Telefonnetz nach Anspruch 6, bei dem die Verbindungen zwischen der zentralen Einheit und den Endgeräten (2, 3) Fest- oder Funkverbindungen sind.

## Claims

1. Method for the takeover of call charges by the calling subscriber (A) in individual calls of a telephone network (1), in which following agreement of a charge division between both subscribers a caller-specific signal is transmitted by the terminal (2) of the calling subscriber (A) as binding confirmation of this agreement to a central unit (7, 8) of the telephone network (1), the central unit (7, 8) processes the caller-specific signal and thereupon the called subscriber (B) accepts the call, **characterized in that** the caller-specific signal is transmitted in the form of a digital signature.

2. Method according to claim 1, in which the digital signature to be transmitted is generated in the terminal (2; 3) of the calling subscriber (A) by means of a chip card.

3. Method according to claim 1 or 2, in which the charge negotiation is executed by functions of an intelligent network (8).

4. Method according to claim 3, in which the telephone network (1) consists of two cooperating networks (4, 5), in which the functions of the intelligent network are provided by the network (4) of the calling subscriber (A) and in which the functions of the intelligent network include an authentication of the calling subscriber (A) as well as a charge division between the two cooperating networks (4, 5).

5. Method according to one of the preceding claims, in which the charge division is agreed before the set-up of a call or during the call.

6. Telephone network (1) containing several terminals (2, 3) and at least one central unit (7, 8), which is constructed in particular in a central network architecture, in which the central unit (7, 8) has means for agreeing a charge division between two terminals (2, 3) as well as means for processing a caller-specific signal transmitted by a terminal (2, 3) as binding confirmation of this agreement, **characterized in that** the caller-specific signal comprises a digital signature.

7. Telephone network according to claim 6, in which the connections between the central unit and the terminals (2, 3) are permanent or radio connections.

## Revendications

1. Procédé pour l'acceptation de frais d'appel par l'abonné (A) appelant dans des liaisons individuelles d'un réseau téléphonique (1), un signal spécifique à l'appelant étant envoyé, après l'accord concernant la répartition des taxes entre les deux abonnés, du terminal (2) de l'abonné (A) appelant, comme confirmation ferme de cet accord, à une unité centrale (7, 8) du réseau téléphonique (1), l'unité centrale (7, 8) traitant le signal spécifique à l'appelant et l'abonné (B) appelé acceptant ensuite l'appel, **caractérisé en ce que** le signal spécifique à l'appelant est envoyé sous la forme d'une signature numérique.

2. Procédé selon la revendication 1, dans lequel la signature numérique à envoyer est générée dans le terminal (2 ; 3) de l'abonné (A) appelant au moyen d'une carte à puce.

3. Procédé selon la revendication 1 ou 2, dans lequel la négociation des taxes est effectuée par des fonctions d'un réseau (8) intelligent.

4. Procédé selon la revendication 3, dans lequel le réseau téléphonique (1) est constitué de deux réseaux (4, 5) coopérants, dans lequel les fonctions du réseau intelligent sont mises à disposition par le réseau (4) de l'abonné (A) appelant et dans lequel les fonctions du réseau intelligent comprennent une authentification de l'abonné (A) appelant et une répartition des taxes entre les deux réseaux (4, 5) coopérants.

5. Procédé selon l'une quelconque des revendications précédentes, dans lequel la répartition des taxes est convenue avant l'établissement d'une liaison ou pendant la liaison.

6. Réseau téléphonique (1) contenant plusieurs terminaux (2, 3) et au moins une unité centrale (7, 8), qui est construite en particulier dans une architecture de réseau central, l'unité centrale (7, 8) présentant des moyens pour convenir d'une répartition de taxes entre deux terminaux (2, 3) ainsi que les moyens pour traiter un signal spécifique à l'appelant et transmis d'un terminal (2, 3) comme confirmation ferme de cet accord, **caractérisé en ce que** le signal spécifique à l'appelant comprend une signature numérique.

7. Réseau téléphonique selon la revendication 6, dans lequel les liaisons entre l'unité centrale et les terminaux (2, 3) sont des liaisons fixes ou des liaisons radio.
